# EUROPÄISCHE PATENTSCHRIFT

(11) **EP 0 833 527 B1**
(45) Veröffentlichungstag und Bekanntmachung des Hinweises auf die Patenterteilung: **14.11.2001**
(21) Anmeldenummer: 97440081.4
(22) Anmeldetag: 22.09.1997
(51) Int. Cl.: H04Q 3/00

(54) **Verbindungsaufbauverfahren sowie Vermittlungsstelle und Dienststeuereinrichtung**
Connection set-up method, switching exchange and service steering unit
Procédé pour l'établissement de connexions, central de commutation et dispositif de commande de service

(30) Priorität: 28.09.1996 DE 19640069
(43) Veröffentlichungstag der Anmeldung: 01.04.1998
(73) Patentinhaber: ALCATEL, 75008 Paris (FR)
(72) Erfinder: Horrer, Matthias, Germantown, MD 20874 (US); Krank, Lothar, 71229 Leonberg (DE); Stahl, Uwe, 71229 Leonberg (DE)
(74) Vertreter: Zinsinger, Norbert

(56) Entgegenhaltungen:
- EP-A- 0 708 570
- US-A- 5 598 464
- BISHOP T: "FREEING THE NETWORK FOR COMPETITION" TELECOMMUNICATIONS,US,DEDHAM, MA, Bd. 29, Nr. 4, 1. April 1995 (1995-04-01), Seiten 75,77-78,80, XP002037911 ISSN: 0040-2494

## Beschreibung

Die Erfindung betrifft ein Verbindungsaufbauverfahren zum Aufbau einer Verbindung durch ein Kommunikationsnetz zu einem gerufenen Endgerät, das geographisch im Bereich von zwei oder mehr Teilnehmeranschlußnetzen liegt, nach dem Oberbegriff von Anspruch 1 sowie eine Vermittlungsstelle für ein Kommunikationsnetz und eine Dienststeuereinrichtung zum Anschluß an eine oder an mehrere Vermittlungsstellen eines Kommunikationsnetzes nach dem Oberbegriff von Anspruch 13 bzw. 15.

Bei den heute üblichen Verbindungsaufbauverfahren wird eine Verbindungsanforderung mittels einer in ihr eingetragenen Rufnummer des gerufenen Teilnehmers zum Teilnehmeranschluß des gerufenen Teilnehmers geleitet. Die Rufnummer gibt hierbei den Weg durch das Kommunikationsnetz vor und wird bei dem Weg durch das Kommunikationsnetz Schritt für Schritt ausgewertet, d. h. sie adressiert beispielsweise zuerst den Ortsnetzbereich, dann die Teilnehmervermittlungsstelle und dann den Teilnehmeranschluß des gerufenen Teilnehmers innerhalb des Nummerierungsbereiches der Teilnehmervermittlungsstelle.

All diese Verbindungsaufbauverfahren versagen jedoch, wenn sich die Teilnehmeranschlußnetze verschiedener Netzbetreiber den Rufnummernbereich eines Teilnehmeranschlußbereiches teilen und die Forderung der Rufnummernportabilität besteht. Rufnummernportabilität bedeutet hier, daß ein Teilnehmer den Teilnehmeranschlußnetz-Betreiber in seinem Teilnehmeranschlußnetzbereich wechseln kann und hierbei seine Rufnummer zu dem neuen Netzbetreiber mitnehmen kann. Dies hat zur Folge, daß keine fixe, aus der Rufnummer erkennbare Zuordnung zwischen Teilnehmeranschlußnetz und Rufnummer eines gerufenen Teilnehmers mehr besteht.

Die Erfindung geht nun von einem Verbindungsaufbauverfahren in einer deregulierten Netzumgebung aus, wie es im Bericht "High level service description for number portability" der "Public Network Operators - Interest Group", 29 Juni 1994, als mögliche Lösung für die Realisierung der Rufnummernportabilität im Vereinigten Königreich (UK) vorgeschlagen wird.

Rufnummernportabilität wird durch Umwertung der Rufnummer mittels Anrufweiterschaltung oder mittels eines IN-Dienstes (IN = Intelligent Network) realisiert. Wechselt ein Teilnehmer innerhalb eines Orstnetzbereiches von einem ersten Netzbetreiber zu einem zweiten Netzbetreiber und will seine Rufnummer mitnehmen, so wird eine Anrufweiterleitung als Dienst im Teilnehmeranschlußnetz des ersten Netzbetreibers installiert. Wird eine Verbindungsanforderung mit dieser Rufnummmer von diesem Dienst erkannt, so wird die Verbindungsanforderung in das Teilnehmeranschlußnetz des zweiten Netzbetreibers umgeleitet. Diese Umleitung wird dadurch realisiert, daß anstelle der ursprünglichen Rufnummer in die Verbindungsanforderung eine neue Rufnummer eingetragen wird, die den Teilnehmer als Teilnehmer des Teilnehmeranschlußnetzes des zweiten Netzbetreibers adressiert.

Die portierte Rufnummer und dasjenige Teilnehmeranschlußnetz, in das eine Verbindungsanforderung mit dieser Rufnummer weiterzuleiten ist, sind hierbei von dem Netzbetreiber in eine Datenbank einzugeben. Mittels der Daten aus dieser Datenbank wird der Verbindungsweiterleitungs-Dienst gesteuert.

Ein Nachteil dieser Lösung ist nun, daß diese Datenbank, auf die sich der Weiterleitungs-Dienst stützt, vom Netzbetreiber ständig aktualisiert werden muß. Wird das Aktualisieren der Datenbank versäumt, so ist der betroffene Teilnehmer nicht mehr erreichbar.

Weitere Nachteile ergeben sich, wenn die Portierbarkeit von Rufnummern in größerem Umfang gefordert ist und damit eine Vielzahl von Weiterleitungs-Diensten in einem Kommunikationsnetz bereitstehen. All diese Weiterleitungs-Dienste sind dann mittels einer Master-Datenbank zu synchronisieren. Dies verursacht einen großen Aufwand.

In dem Artikel "Freeing the Network for Competition", Telecommunications, US, Dedham, MA, Bd. 29, Nr. 4, 1. April 1995, Seiten 75, 77-78, 80 wird ebenso ein Verfahren zur Bereitstellung von Rufnummernportabilität in einer deregulierten Netzumgebung beschrieben. Auch bei diesem Verfahren werden die Verbindungsanforderungen mittels vom Betreiber in Netzelementen gespeicherten Weiterleitungsinformationen an portierte Endgeräte weitergeleitet.

Bei dieser Lösung bestehen somit die selben Nachteile wie bei der oben beschriebenen Lösung.

Der Erfindung liegt nun die Aufgabe zugrunde, ein alternatives Verbindungsaufbauverfahren für den Aufbau einer Verbindung in einem Kommunikationsnetz zu einem Endgerät anzugeben, das im Bereich von zwei oder mehr Teilnehmeranschlußnetzen liegt.

Diese Aufgabe wird gelöst durch ein Verbindungsaufbauverfahren nach der Lehre von Anspruch 1 sowie durch eine Vermittlungsstelle und eine Dienststeuereinrichtung nach der Lehre von Anspruch 13 bzw. 15.

Der Grundgedanke der Erfindung besteht darin, daß beim Verbindungsaufbau das Ziel-Teilnehmeranschlußnetz nicht wie bisher aufgrund des Nummerierungsschemas aus der Rufnummer des gerufenen Endgerätes ermittelt wird, sondern aufgrund einer Lernprozedur zu der Rufnummer des gerufenen Endgerätes ermittelt wird.

Die Rufnummer des gerufenen Endgerätes ist hierbei ganz allgemein eine logische Adresse, die ein Endgerät oder einen diesem Endgerät zugeordneten Teilnehmer adressiert.

Die Zuordnung der Rufnummer eines Endgerätes zu einem Teilnehmeranschlußnetz muß so nicht mehr vom Netzbetreiber in eine Datenbank eingetragen werden. Ebenfalls ist keine expliziete Aktualisierung dieser Datenbank mehr erforderlich. Das einer Rufnummer zugeordnete Teilnehmeranschlußnetz wird vielmehr beim Ablauf des Verbindungsaufbauverfahrens gemäß der Lernprozedur gelernt.

Weitere Vorteile der Erfindung ergeben sich, wenn eine Vielzahl von Weiterleitungs-Diensten in einem Kommunikationsnetz bereitstehen.

In diesem Fall ist nicht mehr länger die Bereitstellung einer zentralen Master-Datenbank erforderlich. Die Dienste lernen vielmehr dezentral die Zuordnung von Teilnehmeranschlußnetzen zu den an ihnen ankommenden Rufnummern. Aufgrund dieses dezentralen Lernvorgangs entfällt der Aufwand für die Bereitstellung der zentralen Master-Datenbank und der Kommunikationsaufwand zur Synchronisation der verteilten Datenbanken durch die Master-Datenbank.

Da auf eine zentrale Komponente, nämlich die Master-Datenbank, verzichtet wird, ist bei der Erfindung die Ausfallsicherheit größer. Beim Ausfall der zentralen Master-Datenbank wäre das gesamte Kommunikationsnetz betroffen, wohingegen beim Ausfall eines lernfähigen Knotens lediglich ein Teilnetz von einer Vielzahl von Teilnetzen betroffen wäre.

Es ist jedoch auch möglich, bei der Durchführung des erfindungsgemäßen Verbindungsaufbaufbauverfahrens die Durchführung der Lernprozedur durch eine Master-Datenbank zu unterstützen. Dies führt zu einer Beschleunigung des Lernvorgangs.

Ein weiterer Vorteil ist, daß das erfindungsgemäße Verbindungsaufbauverfahren direkt in die Leitweglenkung von Vermittlungsstellen integrierbar ist und somit der Aufwand für die Einführung dieses Verbindungsaufbauverfahrens gering ist.

Im Folgenden wird die Erfindung anhand zweier Ausführungsbeispiele unter Zuhilfenahme beiliegender Zeichnungen erläutert.
- Fig. 1: zeigt einen Ausschnitt aus einem Blockschaltbild eines Kommunikationsnetzes.
- Fig. 2: zeigt ein Blockschaltbild einer erfindungsgemäßen Vermittlungsstelle für ein erstes Ausführungsbeispiel.
- Fig. 3: zeigt ein Blockschaltbild einer Vermittlungsstelle und einer erfindungsgemäßen Dienststeuereinrichtung für ein zweites Ausführungsbeispiel.

Im ersten Ausführungsbeispiel wird die Durchführung des erfindungsgemäßen Verbindungsaufbauverfahrens in einem Kommunikationsnetz mit einer oder mit mehreren erfindungsgemäßen Vermittlungsstellen erläutert.

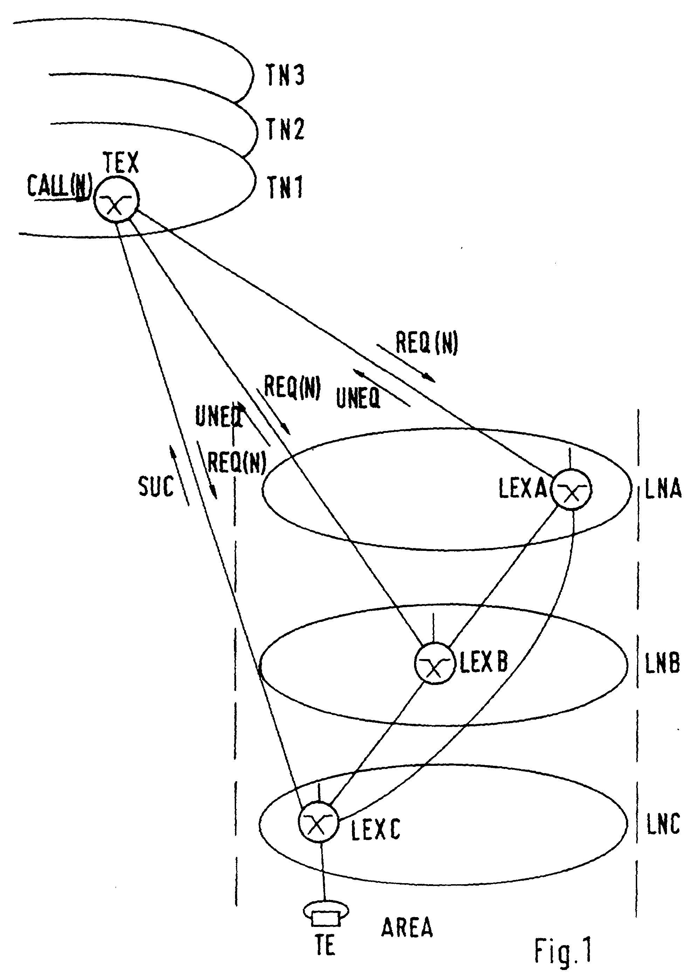

Fig. 1 zeigt einen Ausschnitt aus einem Kommunikationsnetz mit drei Fernnetzen TN1 bis TN3, und drei Teilnehmeranschlußnetzen LNA bis LNC. Über die Teilnehmeranschlußnetze LNA bis LNC werden Endgeräte eines Teilnehmeranschlußbereiches AREA angeschlossen. Von diesen angeschlossenen Endgeräten ist hier nur das Endgerät TE, das an das Teilnehmeranschlußnetz LNC angeschlossen ist, beispielhaft gezeigt. Von den Vermittlungsstellen der Fernnetze TN1 bis TN3 und der Teilnehmeranschlußnetze LNA bis LNC sind hier beispielhaft vier Vermittlungsstellen TEX bzw. LEXA bis LEXC gezeigt.

Die Fernnetze TN1 bis TN3 stellen übliche Fernnetze dar, die dem Bereitstellen von Fernsprech-Verbindungen zwischen Vermittlungsstellen dienen. Die Fernnetze TN1 bis TN3 sind jeweils mit den Teilnehmeranschlußnetzen LNA bis LNC des Teilnehmeranschlußbereiches AREA verbunden, so daß Verbindung zwischen Teilnehmeranschlußnetzen verschiedener Teilnehmeranschlußbereiche über jedes der Fernnetze TN1 bis TN3 aufgebaut werden können.

Es ist auch möglich, daß die Teilnehmeranschlußnetze LNA bis LNC lediglich mit einem Fernnetz verbunden sind und somit keine Wahlmöglichkeit in Bezug auf ein Fernnetz und damit in Bezug auf einen Fernnetzbetreiber besteht.

Bei den Teilnehmeranschlußnetzen LNA bis LNC handelt es sich um übliche Anschlußnetze für den Anschluß von Fernsprechendgeräten und Nebenstellenanlagen. Mögliche Fernsprechendgeräte sind hierbei Telefone, Faxgeräte, aber auch Modems und Schnittstellenkarten für den Anschluß von Datenverarbeitungsanlagen. Es kann sich hierbei sowohl um analoge als auch um ISDN-Endgeräte (ISDN = Integrated Services Digital Network) handeln.

Bei dem Endgerät TE handelt es sich um ein solches Endgerät.

Die Teilnehmeranschlußnetze LNA bis LNC werden jeweils von einer oder von mehreren Teilnehmervermittlungsstellen gebildet. Von diesen Teilnehmervermittlungsstellen ist jeweils die Vermittlungsstelle LEXA, LEXB bzw. LEXC gezeigt. Alle Endgeräte von Teilnehmern, die einem der Teilnehmeranschlußnetze LNA bis LNC zugeordnet sind, sind über Teilnehmeranschlußleitungen mit solch einer Teilnervermittlungsstelle des jeweiligen Teilnehmeranschlußnetzes verbunden. Größere Teilnehmeranschlußnetze können aufgrund der höheren Verkehrsbelastung auch Transitvermittlungsstellen enthalten. Die Vermittlungsstellen eines Teilnehmeranschlußnetzes sind über Querleitungen untereinander und mit einer oder mit mehreren Transitvermittlungsstellen der Fernnetze TN1 bis TN3 verbunden.

Es ist auch möglich, daß Vermittlungsstellen der Teilnehmeranschlußnetze LNA bis LNC über Querleitungen mitteinander verbunden sind.

Es ist auch möglich, daß es sich bei den Teilnehmeranschlußnetzen LNA bis LNC um Funknetze handelt, beispielsweise nach dem GSM-Standard (GSM = Global System for Mobile Communications) oder nach dem DECT-Standard (DECT = Digital Enhanced Cordless Telephone). Solche Funk-Schnittsfellen können auch Bestandteil eines oder mehrerer Vermittlungsstellen eines der Teilnehmeranschlußnetze LNA bis LNC sein, d. h. lediglich ein Teil der Teilnehmer dieses Teilnehmeranschlußnetzes ist über ein oder mehrere Funknetze angeschlossen.

Die Teilnehmeranschlußnetze LNA bis LNC sind unterschiedlichen Netzbetreibern zugeordnet. Da sie denselben Teilnehmeranschlußbereich AREA, beispielsweise denselben Ortsnetzbereich, abdecken, teilen sich die Teilnehmeranschlußnetze LNA bis LNC den Nummerierungsbereich des Teilnehmeranschlußbereichs AREA. Die Teilnehmeranschlußnetze LNA bis LNC stehen somit parallel zueinander im selben geographischen Gebiet unter derselben Ortsnetzkennung den dort ansässigen Teilnehmern zur Verfügung. Die Teilnehmer können damit auswählen, über welches der Teilnehmeranschlußnetze LNA bis LNC ihr Endgerät angeschlossen ist und durch diese Wahl den Teilnehmeranschlußnetzbetreiber und damit die für den Teilnehmeranschluß geltenden Konditionen festlegen.

Im Folgenden wird beispielhaft der Aufbau einer Verbindung von einem rufenden Endgeräte des Kommunikationsnetzes über das Fernnetz TN1 zu dem Endgerät TE beschrieben.

Das rufende Endgerät sendet eine Verbindungsanforderung mit einer Rufnummer N, die das gerufene Endgerät TE kennzeichnet, an die Teilnehmervermittlungsstelle, an die es angeschlossen ist.

Es ist auch möglich, daß es sich es sich bei der Rufnummer N um eine logische Netzadresse oder um eine Adresse handelt, die den gerufenen Teilnehmer kennzeichnet.

Die Teilnehmervermittlungsstelle leitet die Verbindungsanforderung als Signalisierungsnachricht CALL (N) über das Nr. Signalisierungssystem an das Fernnetz TN1 weiter. Die Signalisierungsnachricht CALL (N) wird sodann durch das Fernnetz TN1 zu der Vermittlungsstelle TEX geleitete, die die Transitvermittlungsstelle darstellt, über die Teilnehmeranschlußnetze LNA bis LNC an das Fernnetz angeschlossen sind.

Das Weiterleiten der Signalisierungsnachricht CALL (N) von Vermittlungsstelle zu Vermittlungsstelle und schließlich zur Vermittlungsstelle TEX wird hierbei durch die Leitweglenkungsfunktionen in diesen Vermittlungsstellen gesteuert. Diese Leitweglenkungsfunktionen werten die Rufnummer N von Vermittlungsstelle zu Vermittlungsstelle sukzessiv aus. So erkennt beispielsweise die Teilnehmervermittlungsstelle aus den ersten Ziffern der gewählten Nummer, daß die Signalisierungsnachricht CALL (N) an die zuständige Transitvermittlungsstelle des Fernnetzes TN1 zu leiten ist, diese Transitvermittlungsstelle erkennt dann aus der nächsten oder den nächsten Ziffern der Rufnummer, an welche anderen Vermittlungsstellen des Fernnetzes die Signalisierungsnachricht CALL (N) weiterzuleiten ist usw..

In der Vermittlungsstelle TEX wird auf andere Weise über die Weiterleitung der Signalisierungsnachricht CALL (N) entschieden. Diejenige Vermittlungsstelle, an die die Signalisierungsnachricht CALL (N) weitergeleitet wird, wird auf der Grundlage einer Lernprozedur bestimmt.

Die Lernprozedur besteht nun aus folgender Vorgehensweise:

Die Vermittlungsstelle TEX überprüft sukzessiv, in welchem der Teilnehmeranschlußnetze LNA bis LNC der Rufnummer N ein Endgerät zugeordnet ist.

Hierfür sendet sie nacheinander jeweils eine Signalisierungsnachricht REQ(N) mit der Rufnummer N oder dem dem Nummerierungsbereich des Teilnehmeranschlußbereiches AREA entsprechenden Teil der Rufnummer N an jeweils eine Vermittlungsstelle der Teilnehmeranschlußnetze LNA bis LNC, beispielsweise zuerst an die Vermittlungsstelle LEXA, als zweites an die Vermittlungsstelle LEXB und als drittes an die Vermittlungsstelle LEXC.

Es ist auch möglich, daß sie die Signalisierungsnachricht REQ(N) parallel an diese Vermittlungsstellen sendet.

Die jeweilig Vermittlungsstelle LEXA, LEXB bzw. LEXC testet jeweils auf den Empfang der Signalisierungsnachricht REQ(N), ob ein Teilnehmeranschluß mit der Rufnummer N in dem Teilnehmeranschlußnetz LNA, LNB bzw. LNC besteht oder nicht, und sendet sodann eine Rücknachricht an die Vermittlungsstelle TEX zurück, die diese Information enthält. Durch die Auswertung dieser empfangenen Rücknachrichten erhält die Lernprozedur die Information, in welches der Teilnehmeranschlußnetze LNA bis LNC des Teilnehmeranschlußbereiches AREA sie die Verbindungsanforderung CALL(N) weiterzuleiten hat, d.h. über welches der Teilnehmeranschlußnetze LNA bis LNC die Verbindung zu dem Endgerät TE aufzubauen ist.

Bei der Signalisierungsnachricht REQ(N) handelt es sich um die Verbindungsanforderung zum Aufbau einer Verbindung gemäß dem Nr. 7 Signalisierungssystem. Dies hat den Vorteil, daß die Verbindungsanforderung nicht mehr zusätzlich an diese Vermittlungsstelle gesendet werden muß. Es ist jedoch auch möglich, daß es sich hierbei um eine eigens für diese Funktion spezifizierte Nachricht handelt, die beispielsweise ebenfalls über das Nr. 7 Signalisierungssystem übertragen wird.

Die Signalisierungsnachricht REQ(N) wird wie folgt in den Teilnehmeranschlußnetzen LNA bis LNC bearbeitet:

Ist beispielsweise die Vermittlungsstelle LEXA die einzige Vermittlungsstelle des Teilnehmeranschlußnetzes LNA, so sind alle Teilnehmeranschlüsse dieses Netzes mit ihr verbunden und sie verfügt in ihrer Leitweglenkung über eine Liste, welche Rufnummer welchem Teilnehmeranschluß zugeordnet ist. Für die Überprüfung durchsucht sie diese Liste und erkennt, wenn der dem Nummerierungsbereich des Teilnehmeranschlußbereiches AREA entsprechende Teil der Rufnummer N nicht als Rufnummer in der Liste aufgeführt ist. In diesem Fall sendet sie eine Rücknachricht UNEQ an die Vermittlungsstelle TEX zurück. Die Rücknachricht UNEQ wird hierbei als Nr. 7 Nachricht über das Nr. 7 Signalisierungssystem an die Vermittlungsstelle TEX gesendet.

Ist beispielsweise die Vermittlungsstelle LEXB eine von mehreren Vermittlungsstellen des Teilnehmeranschlußnetzes LNB, so überprüft die Vermittlungsstelle LEXB wie die Vermittlungsstelle LEXA, ob sie über einen Teilnehmeranschluß mit der Rufnummer N verfügt. Ist dies nicht der Fall, so leitet sie die Verbindungsanforderung CALL(N) an die oder eine der anderen Vermittlungsstellen des Teilnehmeranschlußnetzes LNB weiter. Diese andere Vermittlungsstelle führt dann eine analoge Überprüfung durch.

Die Auswahl der Vermittlungsstelle, an die die Vermittlungsstelle LEXB die Verbindungsanforderung weiterreicht, kann hierbei aufgrund eines Nummerierungsschemas erfolgen. Die Auswahl erfolgt somit aufgrund einer Zuordnung einer bestimmten vorderen Ziffernfolge der Rufnummer N als die eine bestimmte Vermittlungsstelle des Teilnehmeranschlußnetzes LNB kennzeichnende Ziffernfolge.

Eine zweite Möglichkeit besteht darin, daß die Vermittlungsstelle LEXB über eine Liste verfügt, die aussagt, welche der in dem Teilnehmeranschlußnetz LNB vorhandenen Rufnummern welcher der Teilnehmervermittlungsstellen des Teilnehmeranschlußnetzes LNB zugeordnet ist. In diesem Fall ist es auch möglich, daß die Überprüfung allein von der Vermittlungsstelle LEXB durch Auswertung dieser Liste durchgeführt wird.

Eine dritte Möglichkeit besteht darin, daß die Vermittlungsstelle LEXB analog zur Vermittlungsstelle TEX eine Lernprozedur durchführt und mittels dieser Lernprozedur eine Liste anlegt, welche Rufnummer welchem der Vermittlungsstellen des Teilnehmeranschlußnetzes LEXB zugeordnet ist.

Es ist auch möglich, daß jedes oder mehrere der Vermittlungsstellen des Teilnehmeranschlußnetzes LNB über eine Verbindung zur Vermittlungsstelle TEX verfügt. In diesem Fall würde die Vermittlungsstelle TEX die Verbindungsanforderung REQ(N) nacheinander an diese Vermittlungsstellen senden. Die einzelnen Vermittlungsstellen würden auf den Empfang dieser Anforderung eine Überprüfung analog zur der von den Vermittlungsstellen LNA oder LNB durchgeführten Überprüfung durchführen.

Das Endgerät TE ist ebenfalls nicht über das Teilnehmeranschlußnetz LNB angeschlossen und damit wird ebenfalls eine Rücknachricht UNEQ von der Vermittlungsstelle LEXB an die Vermittlungsstelle TEX zurückgesendet.

Die Vermittlungsstelle LEXC erkennt, daß an sie ein Endgerät mit der Rufnummer N angeschlossen ist, nämlich das Endgerät TE. Somit sendet sie auf den Empfang der Signalisierungsnachricht REQ(N) eine Rücknachricht SUC an die Vermittlungsstelle TEX zurück. Die Rücknachricht SUC wird hierbei als Nr. 7 Nachricht über das Nr. 7 Signalisierungssystem an die Vermittlungsstelle TEX gesendet.

Auf das Rücksenden der Rücknachricht SUC könnte auch verzichtet werden. Beispielsweise könnte das Fehlen einer Rücknachricht, das beispielsweise nach dem Ablauf eines Timers diagnostiziert wird, als Anzeichen dafür gewertet werden, daß das gerufene Endgerät über das Teilnehmeranschlußnetz LNC angeschlossen ist.

Mit dem Rücksenden der Rücknachricht SUC leitet die Vermittlungsstelle LEXC einen Ruf an das Endgerät TE. Hebt der Teilnehmer beim Endgerät TE ab, so veranlaßt die Vermittlungsstelle LEXC den rückwärtigen Aufbau einer Verbindung zwischen dem Endgerät TE und dem rufenden Endgerät gemäß dem von der Verbindungsanforderung CALL(N) vom rufenden zum gerufenen Endgerät zurückgelegten Weg durch das Kommunikationsnetz.

Es ist auch möglich, daß parallel zur Weiterleitung der Verbindungsanforderung CALL(N) durch das Kommunikationsnetz eine Nutzkanalverbindung Stück für Stück durch das Kommunikationsnetz durchgeschaltet wird, d. h. daß der Verbindungsaufbau parallel und entsprechend zur Verbindungsanforderung CALL(N) durchgeführt wird.

Es ist auch möglich, daß andere oder weitere der Vermittlungsstellen des Kommunikationsnetzes während des Verbindungsaufbaus diejenige Vermittlungsstelle, an die sie eine Verbindungsanforderung weiterleiten, nach dem durch die Vermittlungsstelle TEX durchgeführten Verfahren bestimmen. All dies Vermittlungsstellen stehen hierbei vor dem Problem, daß die Verbindungsanforderung an ein Endgerät des Teilnehmeranschlußbereiches AREA gerichtet ist und daß sie bestimmen müssen, über welches der Teilnehmeranschlußnetze LNA bis LNC ein Verbindungsaufbau zu diesem Endgerät durchzuführen ist. Bei solchen Vermittlungsstellen könnte es sich somit beispielsweise um Vermittlungsstellen der Teilnehmeranschlußnetze LNA bis LNC handeln, die über eine Querleitung mit einer oder mehreren Vermittlungsstellen eines oder mehrerer der anderen der Teilnehmeranschlußnetze LNA bis LNC verbunden sind und die somit an der Bearbeitung eines Verbindungsaufbaus zwischen Endgeräten beteiligt sind, die an unterschiedliche der Teilnehmeranschlußnetze LNA bis LNC angeschlossen sind.

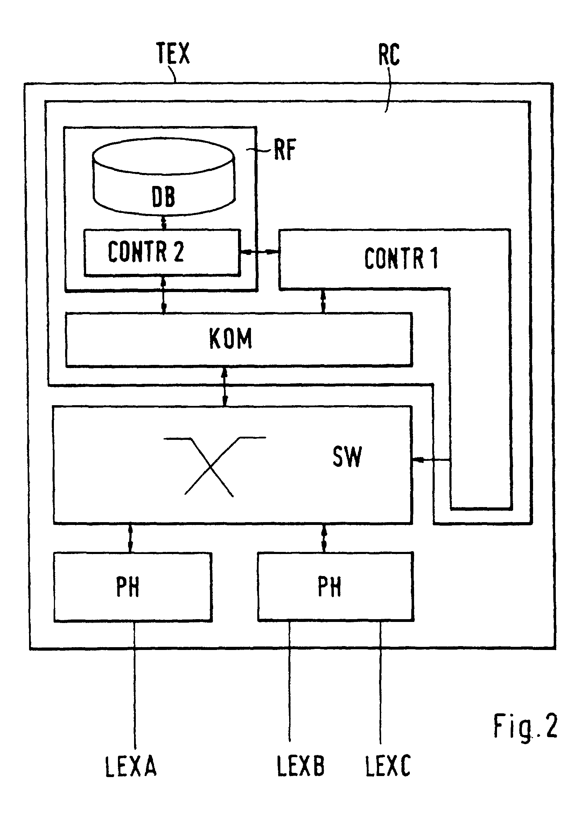

Anhand von Fig. 2 wird nun die detaillierte Durchführung der Lernprozedur beim Verbindungsaufbau erläutert.

Fig. 2 zeigt die Vermittlungsstelle TEX mit zwei Anschlußeinheiten PH, einem Koppelnetz SW und einer für die Leitweglenkung zuständigen Steuerung RC.

Die Anschlußeinheiten PH stellen Funktionen bereit, die den Teilnehmeranschluß von Endgeräten und insbesondere den Anschluß von Querleitungsbündeln zu anderen Vermittlungsstellen ermöglichen. Über die Anschlußeinheiten PH sind beispielsweise die Vermittlungsstellen LEXA bis LEXC über Querleitungsbündel mit der Vermittlungsstelle TEX verbunden.

Die Anschlußeinheiten PH und die Steuerung RC tauschen über das Koppelnetz SW Daten aus.

Die Steuerung RC steuert das Koppelnetz SW. Sie weist eine Kommunikationseinheit KOM und zwei Steuereinheiten RF und CONTR1 auf.

Die Kommunikationseinheit KOM enthält die notwendigen hard- und softwaremäßigen Funktionsgruppen, die für den Empfang und das Senden von Signalisierungsnachrichten über das Koppelnetz SW notwendig sind. Diese Funktionsgruppen ermöglichen insbesondere den Empfang der Verbindungsanforderung CALL(N) und der Rücknachrichten SUC und UNEQ und das Senden der Signalisierungsnachricht REQ(N).

Die Steuereinheiten CONTR1 und RF bestehen aus Steuerprogrammen, die auf der Datenverarbeitungsplattform der Vermittlungsstelle TEX ablaufen. Die Steuereinheit RF ist hierbei für die Steuerung der Lernprozedur und die Steuereinheit CONTR1 für den restlichen Teil der Steuerung eines Verbindungsaufbaus über die Vermittlungsstelle TEX zuständig.

Empfängt die Steuereinheit CONTR1 eine Verbindungsanforderung, beispielsweise die Verbindungsanforderung CALL(N), so bestimmt sie aus der in der Verbindungsanforderung enthaltenen Rufnummer, ob die Verbindungsanforderung an ein Endgerät des Teilnehmeranschlußbereiches AREA gerichtet ist und somit das Teilnehmeranschlußnetz bestimmt werden muß, über das dieses Endgerät erreichbar ist. Ist dies der Fall, so wird eine Nachricht an die Steuereinheit RF gesendet, die daraufhin dieses Teilnehmeranschlußnetz bestimmt und den weiteren Verbindungsaufbau über dieses Teilnehmeranschlußnetz durch die Steuereinheit CONTR1 veranlaßt.

Die Steuereinheit RF weist eine Steuerlogik CONTR2 und eine Datenbank DB auf.

Die Steuerlogik CONTR2 steuert das Senden der Signalisierungsnachrichten REQ(N) gemäß dem nach Fig. 1 beschriebenen Verfahren. Empfängt die Steuerlogik CONTR2 eine positive Rückantwort SUC, so stoppt sie mit dem weiteren Senden von Signalisierungsnachrichten REQ(N) an Vermittlungsstellen der noch verbleibenden Teilnehmeranschlußnetze. Die Reihenfolge, in der die Signalisierungsnachrichten REQ(N) an die Vermittlungsstellen der Teilnehmeranschlußnetze gesendet werden, kann hierbei zufällig gewählt werden oder für alle Verbindungsanforderungen fest vorgegeben sein.

Es ist vorteilhaft, diese Reihenfolgen durch statistische Auswertung von Verbindungsaufbauversuchen zu Endgeräten des Teilnehmeranschlußbereiches zu bestimmen. Beispielsweise wird zuerst eine Signalisierungsnachricht REQ(N) an eine Vermittlungsstelle desjenigen Teilnehmeranschlußnetzes gesendet, über das die meisten Verbindungen aufgebaut werden usw. Durch laufende statistische Auswertung der Verbindungsaufbauversuche zu Endgeräten des Teilnehmeranschlußbereiches AREA kann die Reihenfolge hierbei adaptiv an das Teilnehmerverhalten angepaßt werden.

Es ist hierbei auch möglich, daß die Signalisierungsnachricht REQ(N) zuerst an dasjenige Teilnehmeranschlußnetz gesendet wird, über das die meisten Verbindungen aufgebaut werden und daß, wenn dieser Versuch nicht erfolgreich ist, sodann die Signalisierungsnachricht REQ(N) parallel an alle restlichen Teilnehmeranschlußnetze gesendet wird.

In der Datenbank DB werden Daten über die Zuordnung von Rufnummern zu Teilnehmeranschlußnetzen des Teilnehmeranschlußbereiches AREA abgespeichert. Ermittelt die Lernprozedur mittels des oben beschriebenen Verfahrens bei der Durchführung des Verbindungsaufbaus dasjenige Teilnehmeranschlußnetz, über das ein Endgerät mit einer bestimmten Rufnummer angeschlossen ist, so wird diese Rufnummer mit diesem Teilnehmeranschlußnetz als Zuordnung in der Datenbank DB gespeichert. Bei der Durchführung der Lernprozedur wird zuerst die Datenbank DB durchsucht, ob dort bereits eine Zuordnung eines Teilnehmeranschlußnetzes zu der in der Verbindungsanforderung enthaltenen Rufnummer abgespeichert ist. Ist dies der Fall, so wird diese Zuordung für den Verbindungsaufbau verwendet. Sollte diese Zuordnung nicht mehr korrekt sein, weil beispielsweise ein Teilnehmer seinen Teilnehmeranschlußnetzbetreiber gewechselt hat, so wird dies durch den Empfang der Rückantwort UNEQ erkannt. In diesem Fall wird die Lernprozedur wie oben beschrieben durchgeführt, d.h. es werden sukzessiv Signalisierungsnachrichten REQ(N) versendet.

Es ist auch möglich, auf die Datenbank DB zu verzichten und die Lernprozedur allein durch das Versenden der Signalisierungsnachrichten REQ(N) und durch den Empfang der Rückantworten SUC und UNEQ zu realisieren. Die Verwendung der Datenbank DB hat jedoch den Vorteil, daß die Signalisierungsbelastung des Kommunikationsnetzes gesenkt wird.

Es ist weiter möglich, die Zuordnungen mit einem Zeitstempel zu versehen und eine Zuordnung aus der Datenbank DB zu löschen, nachdem sie über einen längeren Zeitraum nicht mehr angefordert wurde oder seit einem längeren Zeitraum in der Datenbank DB abgespeichert ist. Das Löschen oder Eintragen einer Zuordnung in der Datenbank DB könnte hierbei auch von der Häufigkeit der Anforderung der Zuordnung abhängig gemacht werden. Bei Verwendung solcher Löschstrategien kann der für die Datenbank DB benötigte Speicherplatz erheblich reduziert werden, ohne die Signalisierungsbelastung des Kommunikationsneztes signifikant zu erhöhen.

Eine weitere Möglichkeit besteht darin, daß die Steuerlogik CONTR2 bei der Durchführung der Lernprozedur auch auf eine Master-Datenbank zugreift. Netzweit kann es eine, aber auch mehrere solcher Master-Datenbank geben. Es ist hierbei vorteilhaft, für örtlich zusammenliegende Vermittlungsstellen TEX ein Master-Datenbank vorzusehen.

Wird beispielsweise für eine Rufnummer kein oder keine gültige Eintragung in der Datenbank DB gefunden und wird auch beim Versenden einer oder mehrerer Signalisierungsnachrichten REQ(N) das Teilnehemeranschlußnetz nicht gefunden, erfolgt ein Zugriff auf diese Master-Datenbank. Ist dort ebenfalls keine oder keine gültige Zuordnung gespeichert, so wird mit dem Versenden der restlichen Signalisierungsnachrichten fortgefahren. Wird im Folgenden eine Zuordnung ermittelt, so wird sie in der Datenbank DB und in der Master Datenbank eingetragen.

Im zweiten Ausführungsbeispiel wird die Durchführung des erfindungsgemäßen Verbindungsaufbauverfahrens in einem Kommunikationsnetz mit einer oder mehreren erfindungsgemäßen Dienststeuereinrichtungen erläutert.

Der Verbindungsaufbau wird beim zweiten Ausführungsbeispiel wie nach Fig. 1 durchgeführt, mit dem Unterschied, daß die Vermittlungsstelle TEX durch eine Dienstvermittlungsstelle SSP und eine Dienststeureinrichtung SCP ersetzt wird.

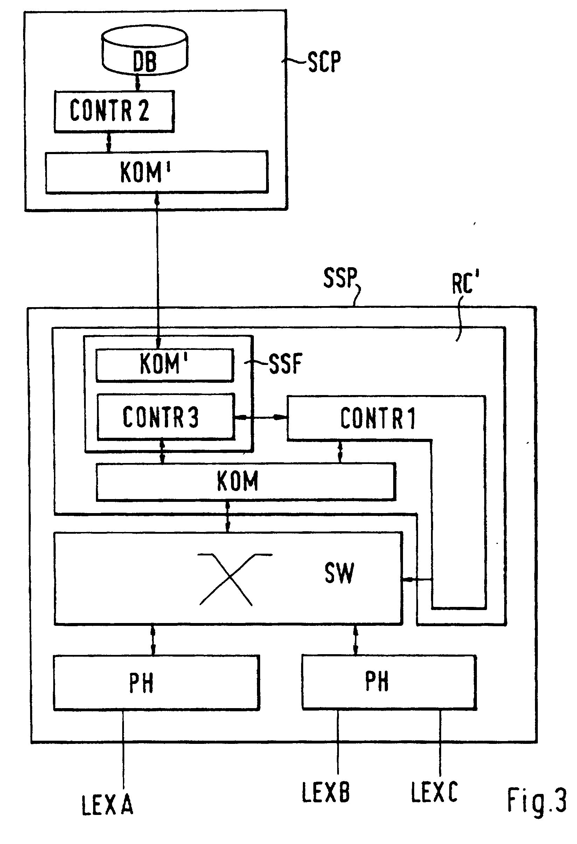

Fig. 3 zeigt die Dienstvermittlungsstelle SSP und die Dienststeureinrichtung SCP, die miteinander, beispielsweise gemäß der IN-Architektur (IN = Intelligent Network) kommunizieren.

Es ist auch möglich, daß zwei oder mehr Dienstvermittlungsstellen SSP auf die Dienststeuereinrichtung SCP zugreifen und somit die Durchführung des erfindungsgemäßen Verbindungsaufbauverfahrens in mehreren Vermittlungsstellen zentral von der Dienststeureeinrichtung SCP gesteuert wird.

Die Dienstvermittlungsstelle weist die Anschlußeinheiten PH, das Koppelnetz SW und eine Steuerung RC' auf, die die Steuereinheit CONTR1, die Kommunikationseinheit KOM und eine Steuereinheit SSF aufweist.

Die Anschlußeinheiten PH, das Koppelnetz SW, die Steuereinheit CONTR1 und die Kommunikationseinheit KOM sind nach Fig. 2 ausgestaltet.

Die Steuereinheit SSF dient der Anbindung der Dienststeuereinrichtung SCP an die Steuerung RC'. Sie weist eine Steuerlogik CONTR3 und eine Kommunikationseinheit KOM' auf.

Kommunikationseinheit KOM' stellt die notwendigen Kommuniktationsdienste für die Kommunikation mit der Dienststeuereinrichtung SCP über das Nr. 7 Signalisierungsnetz oder über ein sonstiges Datennetz, beispielsweise ein X.25 Paketnetz, bereit.

Die Steuerlogik CONTR3 wirkt mit der Steuereinheit CONTR1 und mit der Kommunikationseinheit KOM wie die Steuerlogik CONTR2 nach Fig. 2 zusammen, mit dem Unterschied, daß die eigentlichen Steuerfunktionen in der Dienststeuereinrichtung SCP erbracht werden.

Die Dienststeureinrichtung SCP weist ebenfalls die Kommunikationseinheit KOM', die Steuerlogik CONTR2 und die Datenbank DB auf. Darüber hinaus enthält sie noch Funktionsgruppen, die mit der Steuerlogik CONTR3 und CONTR2 zusammenarbeiten und die Steuerung des eines durch die Steuerung RC' durchgeführten Verbindungsaufbauverfahrens durch die Steuerlogik CONTR2 ermöglichen. Diese Funktionsgruppen, die Steuerlogik CONTR3 und die Kommunikationseinheiten KOM' können beispielsweise gemäß der IN-Architektur zusammenarbeiten.

Die Steuerlogik CONTR2 und die Datenbank DB sind wie nach Fig. 2 ausgestaltet.

Der Verbindungsaufbau wird somit wie nach Fig. 1 und Fig. 2 erbracht, mit dem Unterschied, daß die Lernprozedur von Funktionsgruppen der Dienststeureinrichtung SCP durchgeführt wird.

## Patentansprüche

1. Verbindungsaufbauverfahren zum Aufbau einer Verbindung durch ein Kommunikationsnetz zu einem gerufenen Endgerät (TE), das geographisch im Bereich (AREA) von zwei oder mehr Teilnehmeranschlußnetzen (LNA bis LNC) liegt, wobei bei dem Verfahren ein rufendes Endgerät mittels einer Verbindungsanforderung (CALL(N) ), die mit einer dem gerufenen Endgerät (TE) zugeordneten gerufenen Rufnummer (N) versehen ist, eine Verbindung zu dem gerufenen Endgerät (TE) anfordert und bei dem für den Verbindungsaufbau dasjenige der zwei oder mehr Teilnehmeranschlußnetze (LNA bis LNC) bestimmt wird, über das das gerufene Endgerät (TE) erreichbar ist,
**dadurch gekennzeichnet, daß** dasjenige Teilnehmeranschlußnetz (LNC), über das das gerufene Endgerät (TE) erreichbar ist, mittels einer Lernprozedur zu der gerufenen Rufnummer (N) ermittelt wird.

2. Verfahren nach Anspruch 1, **dadurch gekennzeichnet, daß** die zwei oder mehr Teilnehmeranschlußnetze (LNA bis LNC) einen Teilnehmeranschlußbereich (AREA) mit einem gemeinsamen Rufnummernbereich bilden, wobei sich die zwei oder mehr Teilnehmeranschlußnetze (LNA bis LNC) diesen gemeinsamen Rufnummernbereich teilen.

3. Verfahren nach Anspruch 1, **dadurch gekennzeichnet, daß** die zwei oder mehr Teilnehmeranschlußnetze (LNA bis LNC) von verschiedenen Netzbetreibern betrieben werden.

4. Verfahren nach Anspruch 1, **dadurch gekennzeichnet, daß** bei der Durchführung der Lernprozedur sukzessiv geprüft wird, ob in den Teilnehmeranschlußnetzen (LNA bis LNC) der gerufenen Rufnummer (N) ein Endgerät zugeordnet ist.

5. Verfahren nach Anspruch 4, **dadurch gekennzeichnet, daß** die Prüfung dadurch erfolgt, daß an das jeweilige Teilnehmeranschlußnetz (LNA bis LNC) eine Verbindungsanforderung (REQ(N)) für den Aufbau einer Verbindung zu einem Endgerät mit der gerufenen Rufnummer (N) gesendet wird.

6. Verfahren nach Anspruch 5, **dadurch gekennzeichnet, daß** von dem jeweiligen Teilnehmeranschlußnetz (LNA, LNB) eine Rücknachricht (UNEQ) auf die Verbindungsanforderung (REQ(N) )erfolgt, wenn der gerufenen Rufnummer (N) in dem jeweiligen Teilnehmeranschlußnetz (LNA, LNB) kein Endgerät zugeordnet ist.

7. Verfahren nach Anspruch 4, **dadurch gekennzeichnet, daß** bei erfolgreicher Prüfung zu der gerufenen Rufnummer (N) das geprüfte Teilnehmeranschlußnetz (LNC) als zugeordnetes Teilnehmeranschlußnetz ermittelt wird.

8. Verfahren nach Anspruch 4, **dadurch gekennzeichnet, daß** bei einer erfolgreiche Prüfung die gerufene Rufnummer (N) und dieser zugeordnet das geprüfte Teilnehmeranschlußnetz (LNC) in einer Datenbank (DB) abgespeichert wird.

9. Verfahren nach Anspruch 4, **dadurch gekennzeichnet, daß** die Datenbank (DB) bei der Durchführung der Lernprozedur zunächst daraufhin durchsucht wird, ob die gerufene Rufnummer (N) mit einem zugeordneten Teilnehmeranschlußnetz in der Datenbank (DB) gespeichert ist.

10. Verfahren nach Anspruch 4, **dadurch gekennzeichnet, daß** für die Überprüfung Nachrichten (REQ(N), UNEQ, SUC) über das Nr. 7 Signalisierungssystem mit einem oder mehreren der Teilnehmeranschlußnetze (LNA bis LNC) ausgetauscht werden.

11. Verfahren nach Anspruch 1, **dadurch gekennzeichnet, daß** die Lernprozedur durch einen IN Dienst gesteuert wird.

12. Verfahren nach Anspruch 1, **dadurch gekennzeichnet, daß** die Lernprozedur durch die Leitweglenkung (RC) einer Vermittlungsstelle (TEX) gesteuert wird.

13. Vermittlungsstelle (TEX) für ein Kommunikationsnetz mit einer Leitweglenkungseinrichtung (RC) zur Steuerung des Aufbaus einer Verbindung durch das Kommunikationsnetz zu einem gerufenen Endgerät (TE), wobei die Leitweglenkungseinrichtung (RC) mit Empfangsmitteln (KOM) zum Empfang einer Verbindungsanforderung (CALL(N)) mit einer dem gerufenen Endgerät (TE) zugeordneten gerufenen Rufnummer (N) und mit Steuermitteln (RF, CONTR1) versehen ist, die so ausgestaltet sind, daß sie, wenn das gerufene Endgerät (TE) einem Teilnehmeranschlußbereich (AREA) zugeordnet ist, dessen Rufnummernbereich sich zwei oder mehr Teilnehmeranschlußnetze (LNA bis LNC) teilen, für den Verbindungsaufbaus dasjenige der zwei oder mehr Teilnehmeranschlußnetze (LNC) bestimmen, über das das gerufene Endgerät (TE) erreichbar ist,
**dadurch gekennzeichnet, daß** die Steuermittel (RF, CONTR1) so ausgestaltet sind, daß sie dasjenige Teilnehmeranschlußnetz (LNC), über das das gerufene Endgerät (TE) erreichbar ist, mittels einer Lernprozedur zu der gerufenen Rufnummer (N) ermitteln.

14. Vermittlungsstelle (TEX) nach Anspruch 13, **dadurch gekennzeichnet, daß** die Vermittlungsstelle (TEX) im Kommunikationsnetz am Übergang zwischen Fern- und Ortsnetzebene angeordnet ist.

15. Dienststeuereinrichtung (SCP) zum Anschluß an eine oder an mehrere Vermittlungsstellen (TEX) eines Kommunikationsnetzes mit einer Empfangseinheit (KOM') zum Empfang einer Verbindungsanforderung (CALL(N)) mit einer einem gerufenen Endgerät (TE) zugeordneten gerufenen Rufnummer (N) und mit Steuermitteln (CONTR2, DB), die so ausgestaltet sind, daß sie, wenn das gerufene Endgerät (TE) einem Teilnehmeranschlußbereich (AREA) zugeordnet ist, dessen Rufnummernbereich sich zwei oder mehr Teilnehmeranschlußnetze (LNA bis LNC) verschiedener Netzbetreiber teilen, dasjenige der zwei oder mehr Teilnehmeranschlußnetze (LNC) bestimmen, über das das gerufene Endgerät (TE) erreichbar ist,
**dadurch gekennzeichnet, daß** die Steuermittel (CONTR2, DB) so ausgestaltet sind, daß sie dasjenige Teilnehmeranschlußnetz (LNC), über das das gerufene Endgerät (TE) erreichbar ist, mittels einer Lernprozedur zu der gerufenen Rufnummer (N) ermitteln.

## Claims

1. Method of establishing a connection through a communications network to a called terminal (TE) which is geographically located in the area (AREA) of two or more subscriber line networks (LNA to LNC), the method being such that a calling terminal requests a connection to the called terminal (TE) by means of a connection request (CALL(N)) which is provided with a called call number (N) assigned to the called terminal (TE), and such that the two or more subscriber line networks (LNA to LNC) via which the called terminal (TE) can be reached is determined for the establishment of the connection, **characterized in that** the subscriber line network (LNC) via which the called terminal (TE) can be reached is determined by means of a learning procedure relating to the called call number (N).

2. Method according to Claim 1, **characterized in that** the two or more subscriber line networks (LNA to LNC) form a subscriber line area (AREA) having a common call number range, the two or more subscriber line networks (LNA to LNC) sharing this common call number range.

3. Method according to Claim 1, **characterized in that** the two or more subscriber line networks (LNA to LNC) are operated by different network operators.

4. Method according to Claim 1, **characterized in that** the learning procedure involves checking successively whether in the subscriber line networks (LNA to LNC) a terminal is assigned to the called call number (N).

5. Method according to Claim 4, **characterized in that** the check is made by sending to the respective subscriber line network (LNA to LNC) a connection request (REQ(N)) for the establishment of a connection to a terminal with the called call number (N).

6. Method according to Claim 5, **characterized in that** in response to the connection request (REQ(N)), the respective subscriber line network (LNA, LNB) provides a return message (UNEQ) if no terminal is assigned to the called call number (N) in the respective subscriber line network (LNA, LNB).

7. Method according to Claim 4, **characterized in that**, if the check is positive in respect of the called call number (N), the checked subscriber line network (LNC) is determined as the assigned subscriber line network.

8. Method according to Claim 4, **characterized in that**, if the check is positive, the called call number (N) and, assigned to it, the checked subscriber line network (LNC), are stored in a database (DB).

9. Method according to Claim 4, **characterized in that**, in the performance of the learning procedure, the database (DB) is first searched to determine whether the called call number (N) is stored in the database (DB) with an assigned subscriber line network.

10. Method according to Claim 4, **characterized in that**, for the check, messages (REQ(N), UNEQ, SUC) are exchanged with one or several of the subscriber line networks (LNA to LNC) via the No. 7 signalling system.

11. Method according to Claim 1, **characterized in that** the learning procedure is controlled by an IN service.

12. Method according to Claim 1, **characterized in that** the learning procedure is controlled by the routing (RC) of an exchange (TEX).

13. Exchange (TEX) for a communications network with a routing device (RC) for controlling the establishment of a connection through the communications network to a called terminal (TE), the routing device (RC) being provided with receiving means (KOM) for receiving a connection request (CALL(N)) with a called call number (N) assigned to the called terminal (TE) and with control means (RF, CONTR1) which are designed so that if the called terminal (TE) is assigned to a subscriber line area (AREA) whose call number range is shared by two or more subscriber line networks (LNA to LNC), they determine for the establishment of the connection that of the two or more subscriber line networks (LNC) via which the called terminal (TE) can be reached, **characterized in that** the control means (RF, CONTR1) are designed so that they determine by means of a learning procedure concerning the called call number (N) that subscriber line network (LNC) via which the called terminal (TE) can be reached.

14. Exchange (TEX) according to Claim 13, **characterized in that** the exchange (TEX) is located in the communications network at the transition between the trunk network and the local network level.

15. Service control point (SCP) for connection to one or several exchanges (TEX) of a communications network, with a receiving unit (KOM') for receiving a connection request (CALL(N)) with a called call number (N) assigned to a called terminal (TE), and with control means (CONTR2, DB) which are designed so that if the called terminal (TE) is assigned to a subscriber line area (AREA) whose call number range is shared by two or more subscriber line networks (LNA to LNC) of different network operators, they determine that of the two or more subscriber line networks (LNC) via which the called terminal (TE) can be reached, **characterized in that** the control means (CONTR2, DB) are designed so that they determine by means of a learning procedure concerning the called call number (N) that subscriber line network (LNC) via which the called terminal (TE) can be reached.

## Revendications

1. Procédé d'établissement de connexion pour établir une connexion à travers un réseau de communication avec un terminal appelé (TE) qui se trouve géographiquement dans la zone (AREA) de deux ou plusieurs réseaux de postes d'abonnés (LNA à LNC), dans lequel un terminal appelant demande, au moyen d'une requête de connexion (CALL(N)) qui est munie d'un numéro d'appel (N) affecté au terminal appelé (TE), une connexion avec le terminal (TE) appelé, et dans lequel pour l'établissement de connexion celui des deux ou plusieurs réseaux de postes d'abonné (LNA à LNC) est déterminé à travers lequel le terminal (TE) appelé est joignable, **caractérisé en ce que** le réseau de postes d'abonné (LNC) à travers lequel le terminal (TE) appelé est joignable est déterminé au moyen d'une procédure d'apprentissage pour le numéro d'appel (N) appelé.

2. Procédé selon la revendication 1, **caractérisé en ce que** les deux ou plusieurs réseaux de postes d'abonné (LNA à LNC) forment une zone de postes d'abonné (AREA) avec une plage de numérotation commune, les deux ou plusieurs réseaux de postes d'abonné (LNA à LNC) se partageant cette plage de numérotation commune.

3. Procédé selon la revendication 1, **caractérisé en ce que** les deux ou plusieurs réseaux de postes d'abonné (LNA à LNC) sont exploités par différents opérateurs de réseau.

4. Procédé selon la revendication 1, **caractérisé en ce que** pendant la réalisation de la procédure d'apprentissage, il est vérifié successivement si un terminal est affecté au numéro d'appel (N) dans les réseaux de postes d'abonné (LNA à LNC).

5. Procédé selon la revendication 4, **caractérisé en ce que** la vérification est effectuée **en ce qu'**une requête de connexion (REQ(N)) pour l'établissement d'une connexion avec un terminal avec le numéro d'appel (N) appelé est envoyée au réseau de postes d'abonné (LNA à LNC) respectif.

6. Procédé selon la revendication 5, **caractérisé en ce que** le réseau de postes d'abonné (LNA, LNB) respectif produit un message de retour (UNEQ) quand aucun terminal n'est affecté au numéro d'appel (N) appelé dans le réseau de postes d'abonné (LNA, LNB) respectif.

7. Procédé selon la revendication 4, **caractérisé en ce qu'**en cas de vérification réussie, le réseau de postes d'abonné (LNC) vérifié est déterminé comme réseau de postes d'abonné affecté pour le numéro d'appel (N) appelé.

8. Procédé selon la revendication 4, **caractérisé en ce qu'**en cas de vérification réussie, le numéro d'appel (N) appelé et le réseau de postes d'abonné (LNC) affecté à celui-ci sont stockés dans une base de données (DB).

9. Procédé selon la revendication 4, **caractérisé en ce que** pendant la réalisation de la procédure d'apprentissage, la base de données (DB) est d'abord examinée pour savoir si le numéro d'appel (N) appelé est stocké dans la base de données (DB) avec un réseau de postes d'abonné affecté.

10. Procédé selon la revendication 4, **caractérisé en ce que** pour la vérification, des messages (REQ(N), UNEQ, SUC) sont échangés à travers le système de signalisation n° 7 avec un ou plusieurs des réseaux de postes d'abonné (LNA à LNC).

11. Procédé selon la revendication 1, **caractérisé en ce que** la procédure d'apprentissage est commandée par un service IN.

12. Procédé selon la revendication 1, **caractérisé en ce que** la procédure d'apprentissage est commandée par le routage (RC) d'un central de commutation (TEX).

13. Central de commutation (TEX) pour un réseau de communication avec un dispositif de routage (RC) pour commander l'établissement d'une connexion à travers le réseau de communication avec un terminal (TE) appelé, le dispositif de routage (RC) étant muni de moyens de réception (KOM) pour recevoir une requête de connexion (CALL(N)) avec un numéro d'appel (N) appelé affecté au terminal (TE) appelé et de moyens de commande (RF, CONTR1) qui sont réalisés de telle sorte que, quand le terminal (TE) appelé est affecté à une zone de postes d'abonné (AREA) dont la plage de numérotation est partagée par deux ou plusieurs réseaux de postes d'abonné (LNA à LNC), ils déterminent pour l'établissement de la connexion celui des deux ou plusieurs réseaux de postes d'abonné (LNC) à travers lequel le terminal (TE) appelé est joignable, **caractérisé en ce que** les moyens de commande (RF, CONTR1) sont réalisés de telle sorte qu'ils déterminent le réseau de postes d'abonné (LNC) à travers lequel le terminal (TE) appelé est joignable au moyen d'une procédure d'apprentissage pour le numéro d'appel (N) appelé.

14. Central de commutation (TEX) selon la revendication 13, **caractérisé en ce que** le central de commutation (TEX) est disposé dans le réseau de communication à la transition entre le niveau de réseau interurbain et urbain.

15. Dispositif de commande de service (SCP) pour le raccordement à un ou plusieurs centraux de commutation (TEX) d'un réseau de communication avec une unité de réception (KOM') pour recevoir une requête de connexion (CALL(N)) avec un numéro d'appel (N) appelé affecté à un terminal (TE) appelé et avec des moyens de commande (CONTR2, DB) qui sont réalisés de telle sorte que, quand le terminal (TE) appelé est affecté à une zone de postes d'abonné (AREA) dont la plage de numérotation est partagée par deux ou plusieurs réseaux de postes d'abonné (LNA à LNC), ils déterminent celui des deux ou plusieurs réseaux de postes d'abonné (LNC) à travers lequel le terminal (TE) appelé est joignable, **caractérisé en ce que** les moyens de commande (CONTR2, DB) sont réalisés de telle sorte qu'ils déterminent le réseau de postes d'abonné (LNC) à travers lequel le terminal (TE) appelé est joignable, au moyen d'une procédure d'apprentissage pour le numéro d'appel (N) appelé.
